# EUROPÄISCHE PATENTSCHRIFT

(11) **EP 2 653 733 B1**
(45) Veröffentlichungstag und Bekanntmachung des Hinweises auf die Patenterteilung: **09.10.2019**
(21) Anmeldenummer: 13152440.7
(22) Anmeldetag: 24.01.2013
(51) Int. Cl.: F15B 15/20, B65G 23/44, F16H 7/08

(54) **Vorrichtung zum Spannen eines Zugmittels einer Fördereinrichtung**
Device for tensioning a traction mechanism of a conveyor
Dispositif de serrage d'un moyen de traction d'un convoyeur

(30) Priorität: 18.04.2012 DE 102012007637
(43) Veröffentlichungstag der Anmeldung: 23.10.2013
(73) Patentinhaber: CLAAS Selbstfahrende Erntemaschinen GmbH, 33428 Harsewinkel (DE)
(72) Erfinder: Strieker, Norbert, 33415 Verl (DE)
(74) Vertreter: CLAAS Gruppe

(56) Entgegenhaltungen:
- EP-A1- 0 128 814
- DE-A1- 4 422 445
- DE-A1- 19 925 691

## Beschreibung

Die Erfindung betrifft eine Fördereinrichtung mit einer Vorrichtung zum Spannen zumindest eines Zugmittels der Fördereinrichtung. Bekannterweise weist ein solches Zugmittel eine Vielzahl von Mitnehmern auf und verläuft zwischen einem Antriebsrad und zumindest einem Umlenkrad, wobei zur Veränderung der Spannung des Zugmittels der Achsabstand zwischen dem zumindest einen Umlenkrad und dem Antriebsrad mittels zumindest eines mittelbar am Umlenkrad angreifenden Hydraulikzylinders verstellbar ist, dessen in einem Druckraum verschiebbar angeordneter Hydraulikkolben zum Spannen des Zugmittels aus einer Druckquelle über ein zum Druckraum hin öffnendes Sperrventil mit Druckmittel beaufschlagt wird.

Fördereinrichtungen der vorgenannten Art werden vorzugsweise in Landmaschinen verwendet, um Fördergut, bei dem es sich um Getreide, Halmgut, Knollenfrüchte, Wurzelfrüchte usw. handeln kann, über eine Förderstrecke zu transportieren. Zu diesem Zweck ist zumindest ein als Kette oder Riemen ausgebildetes Zugmittel vorgesehen, auf dem mit Abstand zueinander Mitnehmer angeordnet sind. Diese Mitnehmer können zinken-, mulden- oder plattenförmig ausgebildet sein und fördern das jeweils zu transportierende Gut über eine vorgegebene Förderstrecke, die vorzugsweise zwischen zwei das Zugmittel umlenkenden Rädern liegt.

Von diesen Rädern, die je nach Ausbildung des Zugmittels als Kettenritzel oder Riemenscheibe ausgebildet sind, ist jeweils eine als Antriebselement und eine als Umlenkelement ausgeführt. In dem der Transportstrecke abgewandten Bereich der Fördereinrichtung befindet sich ein Rücklaufbereich für das Zugmittel und die Mitnehmer. Eine derartige Fördereinrichtung kann dabei innerhalb eines Gehäuses angeordnet sein, wobei in diesem Fall zwei voneinander getrennte Schächte vorgesehen sind, von welchen in einem ein Transport des Fördergutes und in dem anderen ein Rücklauf der Förderelemente erfolgt. Weiterhin können derartige Fördereinrichtungen auch zwei parallel verlaufende Zugmittel aufweisen, wobei die als Förderleisten ausgebildeten Mitnehmer an beiden Zugmitteln befestigt sind.

Eine optimale Funktion einer entsprechend ausgebildeten Fördereinrichtung kann dadurch erzielt werden, dass das Zugmittel mit einer ausreichenden Spannung versehen ist, also nicht zu locker ist. Unter anderem wird dadurch erreicht, dass die Mitnehmer in einer vorgegebenen Position gegenüber dem Erntegut bzw. den Wänden des Transportschachtes bewegt werden können. Ansonsten würde im Falle einer nachlassenden Vorspannung des Zugmittels die Förderwirkung der Fördereinrichtung erheblich eingeschränkt. Daher ist es erforderlich, Mittel vorzusehen, mit denen sich die Vorspannung des Zugmittels präzise einstellen lässt. Es sind in diesem Zusammenhang Vorrichtungen zum Spannen eines Zugmittels bekannt, bei denen der Achsabstand der vorgenannten Räder manuell oder selbsttägig verändert wird.

Eine Vorrichtung zum Spannen eines Zugmittels einer Fördereinrichtung der im Oberbegriff des Patentanspruchs 1 genannten Gattung ist aus der DE 199 25 691 A1 bekannt. Die Fördereinrichtungen sind dabei an einem selbstfahrenden Mähdrescher vorgesehen und als Kornelevator, Überkehrelevator oder als Schrägförderer ausgebildet. Jede dieser Vorrichtungen zum Spannen des Zugmittels weist dabei zumindest einen einfach wirkenden Hydraulikzylinder auf, der aus einem Druckmittelsystem mit unter Druck stehendem Hydrauliköl versorgt wird. Ein Druckraum dieses einfach wirkenden Hydraulikzylinders ist über ein als Rückschlagventil ausgebildetes Sperrventil mit der Druckmittelversorgung verbunden, so dass im Falle einer nachlassenden Vorspannung des Zugmittels Druckmittel über das sich selbsttätig öffnende Rückschlagventil in den Druckraum gelangt und den entsprechenden Hydraulikkolben in Richtung einer Erhöhung der Kettenspannung der Fördereinrichtung verschiebt.

Weiterhin ist aus der DE 39 15 227 A1 eine Vorrichtung zum Spannen von Treibriemen, die an Kraftfahrzeugen, insbesondere am Steuertrieb der Brennkraftmaschine oder am Generatortrieb vorgesehen sind, bekannt. Dabei ist eine an einem Lenker gelagerte Spannrolle vorgesehen, die auf das Lostrum des Riementriebs einwirkt und mittels einer aus einer Schraubenfeder und einem Hydraulikzylinder bestehenden Spanneinrichtung vorgespannt wird. Für die Druckmittelversorgung des entsprechenden Hydraulikzylinders ist kein externes Hydrauliksystem erforderlich, da einem Druckraum des Hydraulikzylinders Druckmittel über ein Rückschlagventil zugeführt wird, welches aus einem internen Vorratsraum des Hydraulikzylinders, der als Federspeicher ausgebildet ist, stammt.

Aus der DE 44 22 445 A1 ist eine Fördereinrichtung gemäß dem Oberbegriff des Anspruches 1 bekannt.

Es ist Aufgabe der vorliegenden Erfindung, eine Vorrichtung zum Spannen eines Zugmittels einer Fördereinrichtung der vorgenannten Gattung derart weiterzubilden, dass die Fördereinrichtung stets mit einer Vorspannung ihres Zugmittels betrieben wird, die unterhalb eines maximalen Werts liegt, so dass Überspannungen und folglich Wellenbrüche sowie ein erhöhter Verschleiß des Zugmittels vermieden werden.

Diese Aufgabe wird ausgehend vom Oberbegriff des Patentanspruchs 1 in Verbindung mit dessen kennzeichnenden Merkmalen gelöst. Gemäß dem Oberbegriff des Anspruches 1 ist eine Fördereinrichtung mit einer Vorrichtung zum Spannen zumindest eines Zugmittels der Fördereinrichtung vorgesehen, welches Zugmittel eine Vielzahl von Mitnehmern aufweist und zwischen einem Antriebsrad und zumindest einem Umlenkrad verläuft, wobei zur Veränderung der Spannung des Zugmittels der Achsabstand zwischen dem zumindest einen Umlenkrad und dem Antriebsrad mittels zumindest eines mittelbar am Umlenkrad angreifenden Hydraulikzylinders verstellbar ist, dessen in einem Druckraum verschiebbar angeordneter Hydraulikkolben zum Spannen des Zugmittels aus einer Druckquelle über ein zum Druckraum hin öffnendes Sperrventil mit Druckmittel beaufschlagt wird, wobei der Druckraum nach Erreichen eines Sperrzustandes des Sperrventils mit einer Einrichtung zur Aufnahme eines definierten Druckmittelvolumens verbunden ist, und wobei das Sperrventil als Rückschlagventil ausgebildet ist. Gemäß dem kennzeichnenden Teil des Patentanspruchs 1 weist das Rückschlagventil ein hysteresebehaftetes Schaltverhalten auf, wobei ein in Richtung einer Druckmittelzufuhrbohrung federbelasteter Schließkörper des Rückschlagventils mit der Einrichtung zur Aufnahme des definierten Druckmittelvolumens eine Baueinheit bildet. Nach einer Zuleitung des Druckmittels in den Druckraum des Hydraulikzylinders über das Sperrventil erfolgt somit aufgrund eines Druckanstiegs im Druckraum zunächst ein Schließen des Sperrventils, woraufhin anschließend eine definierte Menge des im Druckraum vorhandenen Druckmittels zur Druckentlastung in die Einrichtung zur Aufnahme dieses Druckmittelvolumens geführt wird. Das hysteresebehaftete Schaltverhalten des Sperrventils sorgt dafür, dass aufgrund dieser Druckentlastung keine Betätigung des Sperrventils erfolgt, die zu einer Öffnung des Sperrventils führen würde. Es soll erst wieder ein Öffnen des Sperrventils erfolgen, wenn ein unterer Grenzwert des Drucks im Druckraum unterschritten wird, wobei dieser Druck unter Berücksichtigung des zuvor abgeführten Druckmittelvolumens definiert ist.

Bei der gattungsgemäßen Vorrichtung zum Spannen eines Zugmittels einer Fördereinrichtung nach der DE 199 25 691 A1 wird demgegenüber jegliches Spiel in der Fördereinrichtung ausgeglichen, so dass insgesamt ein relativ steifes System mit der Gefahr von Überspannungen geschaffen wird und die zuvor erwähnten Risiken auftreten. Zum einen können dadurch der Riemen oder die Ketten stark verschleißen und zum anderen können Lagerschäden an den Wälzlagern von Antriebsrad und Umlenkrad oder sogar Wellenbrüche an den diese Räder aufnehmenden Wellen auftreten.

Nach der DE 39 15 227 A1 ist zwar zwischen dem Druckraum und dem Vorratsraum ein Leckspalt vorgesehen, über den eine gedrosselte Rückströmung von Druckmittel aus dem Druckraum in den Vorratsraum erfolgen kann, um eine extreme Riemenspannung zu vermeiden; eine derartige Ausbildung einer Spanneinrichtung eignet sich aber nur für eine Anordnung an einem entsprechenden Lenker, der mit einer auf das Lostrum eines Riementriebs einwirkenden Spannrolle verbunden ist. Ein derartiger Riemenspanner funktioniert nämlich nur in einem dynamischen System, in welchem das Lostrum des Riemens zu einer erheblichen Auslenkung der Spannrolle führt. Aufgrund dieser Pendelbewegungen des Lenkers, die bereits beim Anlassvorgang der Brennkraftmaschine auftreten, kann über das Rückschlagventil Druckmittel in den Druckraum einströmen. Demgegenüber sind Fördereinrichtungen der in Rede stehenden Gattung relativ statisch, so dass bei Verwendung eines Spanners mit einem Leckspalt nach einem längeren Stillstand der Maschine eine relativ lange Zeit vergehen müsste, bis eine ausreichende Vorspannung des Zugmittels erreicht werden könnte.

Mit der erfindungsgemäßen Vorrichtung kann im Gegensatz dazu stets eine Vorspannung am Zugmittel erreicht werden, die eine optimale Förderwirkung der Fördereinrichtung bewirkt. Eine Vorspannung des Zugmittels, die zu einem in sich steifen System und auch zu einer Erhöhung der Leistungsaufnahme führen würde, tritt demzufolge nicht mehr auf. Zu diesem Zweck wird, wie bereits dargelegt, nach einem Nachspannen des Zugmittels diese Vorspannung um einen geringen, aber definierten Betrag reduziert, so dass diese Nachteile vermieden werden können.

Gemäß der Erfindung ist das Sperrventil als Rückschlagventil ausgebildet, wobei ein in Richtung einer Druckmittelzufuhrbohrung federbelasteter Schließkörper des Rückschlagventils mit der Einrichtung zur Aufnahme des definierten Druckmittelvolumens eine Baueinheit bildet. Demnach ist das Ventilgehäuse des Rückschlagventils derart zu gestalten, dass es das definierte Druckmittelvolumen aufnehmen kann, wobei der federbelastete Schließkörper des Rückschlagventils hierfür eine Steuerfunktion übernehmen soll. Darüber hinaus ist es aber auch möglich, die Einrichtung zur Aufnahme des definierten Druckmittelvolumens in einem gegenüber dem Ventilgehäuse oder dem Rückschlagventil separaten Bauelement vorzusehen. Es könnte sich dabei beispielsweise um einen Druckspeicher handeln, der während eines Nachspannens des Zugmittels drucklos entleert wird und im Anschluss daran mit dem Druckraum des Hydraulikzylinders verbunden ist.

Gemäß einer bevorzugten Ausführungsform der Erfindung soll das Rückschlagventil als Schließkörper einen in einer Ventilhülse verschiebbaren Plungerkolben aufweisen, wobei bei geöffnetem Rückschlagventil die Druckmittelzufuhrbohrung über zumindest eine in der Ventilhülse vorgesehene Queröffnung mit dem Druckraum des Hydraulikzylinders verbunden ist. Folglich ist das Rückschlagventil gegenüber bekannten Ausführungsformen, bei denen dieses als Sitzventil ausgebildet ist, wesentlich verändert, denn es handelt sich um ein leckölfreies Schieberventil, dessen Plungerkolben je nach Stellung einen Querschnitt der Queröffnung freigibt oder verschließt.

Im Zusammenhang mit dieser Ausbildung des Rückschlagventils oder unabhängig davon soll das Rückschlagventil einen in einer Ventilhülse verschiebbaren Plungerkolben aufweisen, der aufgrund des im Druckraum herrschenden Druckes um einen vorgegebenen maximalen Weg in einer Ventilhülse verschiebbar ist. Dabei wirken auf Stirnflächen des Plungerkolbens einerseits der Druck aus der Druckmittelzufuhrbohrung und andererseits der im Druckraum herrschende Druck gemeinsam plus der Vorspannung durch eine Druckfeder. Nach einer Zufuhr von Druckmittel in den Druckraum soll demnach der ansteigende Druck gemeinsam mit der Federkraft den Plungerkolben in Richtung der Druckmittelzufuhrbohrung verschieben, wodurch ein definierter Raum geschaffen wird, der zur Aufnahme eines bestimmten Druckmittelvolumens dient. Dadurch erfolgt ein definiertes Lösen der auf das Zugmittel aufgebrachten Spannung, so dass Überspannungen und Beschädigungen an der Wälzlagerung der das Zugmittel führenden Räder und am Antrieb der Fördereinrichtung vermieden werden können.

Weiterhin soll der Plungerkolben an seinem in Richtung der Druckmittelzufuhrbohrung weisenden Ende einen kegelstumpfförmigen Verlauf aufweisen. Diese Gestaltung des Plungerkolbens sorgt dafür, dass das Schließen und Öffnen der in der Ventilhülse vorgesehenen zumindest einen Queröffnung mit einer Drosselwirkung erfolgt und somit gedämpft verläuft. Es ist aber auch denkbar, den Plungerkolben insgesamt gestuft auszubilden und dann in einem Bereich, in welchem der Plungerkolben dichtend in der Aufnahmebohrung der Ventilhülse geführt ist, mit einer entsprechenden Anfasung zu versehen. Die gesamte Einheit, die im Wesentlichen aus dem Plungerkolben, der Druckfeder und der Ventilhülse besteht, kann unmittelbar in einem Kopfteil des Hydraulikzylinders oder separat zu diesem angeordnet sein. Insbesondere wird durch den kegelstumpfförmigen Verlauf die Montage der Dichtungen vereinfacht.

Außerdem kann gemäß einer weiteren Ausgestaltung der Erfindung der Plungerkolben an seinem in Richtung des Druckraumes weisenden Ende einen im Durchmesser reduzierten Abschnitt und ein von diesem ausgehendes Führungsrohr aufweisen, wobei der Plungerkolben über das Führungsrohr in einem Ventilgehäuse geführt ist. Über dieses Führungsrohr und von diesem ausgehende Querbohrungen gelangt das Druckmittel aus dem Druckraum in einen Raum, in dem der Druckmitteldruck auf zumindest eine am Plungerkolben vorgesehene Ringfläche wirkt.

Außerdem soll der Hydraulikzylinder mit einer Ablassschraube versehen sein. Mittels dieser Ablassschraube kann das Druckmittel aus dem Zylinder abgelassen werden, um den Kolben manuell einzufahren. Dadurch kann das Zugmittel gelöst werden, so dass sich an der Fördereinrichtung Reparatur- und Wartungsarbeiten durchführen lassen.

Alternativ kann der Hydraulikzylinder mit einer Entlastungsschraube versehen sein. Die Entlastungsschraube ermöglicht im drucklosen Zustand das Ablassen von Öl über die Druckmittelzufuhrbohrung, so dass der Hydraulikzylinder gelöst werden kann.

Vorzugsweise soll die erfindungsgemäße Vorrichtung zum Spannen eines Zugmittels einer Fördereinrichtung bei Mähdreschern Verwendung finden. Eine entsprechende als Kettenförderer ausgebildete Fördereinrichtung wird unter anderem als Kornelevator verwendet. Diesem Kornelevator werden über eine einen gemeinsamen Antrieb aufweisende horizontale Förderschnecke Getreide-, Raps- oder Maiskörner zugeführt, wobei plattenförmige Mitnehmer, die auf dem als Kette ausgeführten Zugmittel angeordnet sind, in einen oberhalb eines Dreschwerks des Mähdreschers angeordneten Korntank befördert werden. Durch die erfindungsgemäße Vorrichtung zum Spannen wird eine exakte Einstellung der plattenförmigen Mitnehmer des Zugmittels ermöglicht, was für die Genauigkeit der Detektion des Gutflusses von Bedeutung ist, da hierzu die Schütthöhe auf den Mitnehmern detektiert wird. Dies ist insbesondere an von Vorteil, wenn sich die Förderseite auf dem Leertrum befindet.

Weiterhin kann die erfindungsgemäße Vorrichtung auch an einem Überkehrelevator verwendet werden, der hinsichtlich seiner Ausbildung dem Kornelevator ähnlich gestaltet ist. Dieser Überkehrelevator führt Bestandteile des Erntegutes, die mit Verunreinigungen versehen sind und über die Siebe sowie die Hordenschüttler des Mähdreschers abgeschieden werden, nochmals dem Dreschwerk zu.

Schließlich kann die erfindungsgemäße Vorrichtung auch an einem Schrägförderer vorgesehen sein, der als Kettenförderer ausgebildet ist, und das Erntegut vom Erntevorsatz aus in das Dreschwerk transportiert. Bei diesem Anwendungsfall sind zwei zueinander beabstandete Ketten vorgesehen, die mittels Förderleisten verbunden sind. Daher ist das Umlenkritzel jeder der beiden Ketten mit einer entsprechenden erfindungsgemäß ausgebildeten Spannvorrichtung versehen. Durch die erfindungsgemäße Vorrichtung zum Spannen wird bei einem Schrägförderer ein definiertes Ausweichen der Kette bis zu einem Anschlag im Falle einer Überlast ermöglicht. In allen vorgenannten Anwendungen kann mit Hilfe der hydraulischen Spannvorrichtung, die ein gezieltes Lösen im Anschluss an einen Spannvorgang bewirkt, eine optimale Einstellung der Förderkette erzielt werden.

Im Falle einer Ausbildung der Fördereinrichtung als Elevator soll weiterhin das Kettenritzel des Umlenkrades über eine Welle in vorzugsweise als Flanschlager ausgebildeten Wälzlagern geführt sein, und es sollen in einem Gehäuse des Kettenförderers im Bereich der Flanschlager Schlitze vorgesehen sein, innerhalb welcher die Flanschlager mittels des Hydraulikzylinders verschiebbar sind. Die Flanschlager können dabei über einen Ringabschnitt in diese Schlitze eingreifen, wobei ein Flansch flächig am Gehäuse des Kettenförderers anliegt.

In diesem Zusammenhang ist vorgesehen, dass beidseitig des Gehäuses jeweils eine Koppelstange verläuft, die einerseits über einen Exzenter oder Schwinghebel mit dem Flanschlager und andererseits über eine Strebe mit der Kolbenstange des Hydraulikzylinders verbunden ist. Die Koppelstangen bewirken dabei eine Verdrehung des Exzenters oder Schwinghebels, wodurch eine lineare Verschiebung der Flanschlager in den Schlitzen erzielt werden kann.

Insbesondere kann die Vorrichtung an ein Konstantdrucksystem angeschlossen sein.

Ebenfalls kann die Vorrichtung einen hydraulischen Speicher umfassen, der das Druckmittel mit konstantem Druck bereitstellt.

Die Erfindung ist durch die angegebene Kombination der Merkmale des unabhängigen Patentanspruchs 1 und der von diesem abhängigen Patentansprüche definiert. Außerdem soll die Bezugnahme der Patentansprüche auf die Zeichnung durch die Verwendung von Bezugszeichen den Schutzumfang der Patentansprüche auf keinen Fall auf die dargestellten Ausgestaltungsbeispiele beschränken.

In der nachfolgenden Beschreibung und in den folgenden Figuren sind Ausführungsbeispiele der Erfindung vereinfacht dargestellt.

Es zeigen:
- Figur 1: eine Teilansicht eines selbstfahrenden Mähdreschers mit drei als Kettenförderer ausgebildeten Fördereinrichtungen,
- Figur 2: eine Teilansicht eines Kornelevators mit einem Teillängsschnitt im Bereich eines Zugmittels und daran befestigter Mitnehmer,
- Figur 3: einen Längsschnitt durch einen erfindungsgemäß ausgebildeten Hydraulikzylinder einer Vorrichtung zum Spannen eines Zugmittels einer Fördereinrichtung mit einem Sperrventil, das sich in seiner Sperrstellung befindet,
- Figur 4: einen vergrößerten Ausschnitt IV aus der Darstellung gemäß Figur 3, wobei sich das Sperrventil in seiner geöffneten Stellung befindet und
- Figur 5: einen Längsschnitt durch eine Ventilanordnung mit einem Sperrventil und einer Einrichtung zur Aufnahme eines definierten Druckmittelvolumens, die separat zu einem ein Zugmittel einer Fördereinrichtung vorspannenden Element angeordnet sein kann.

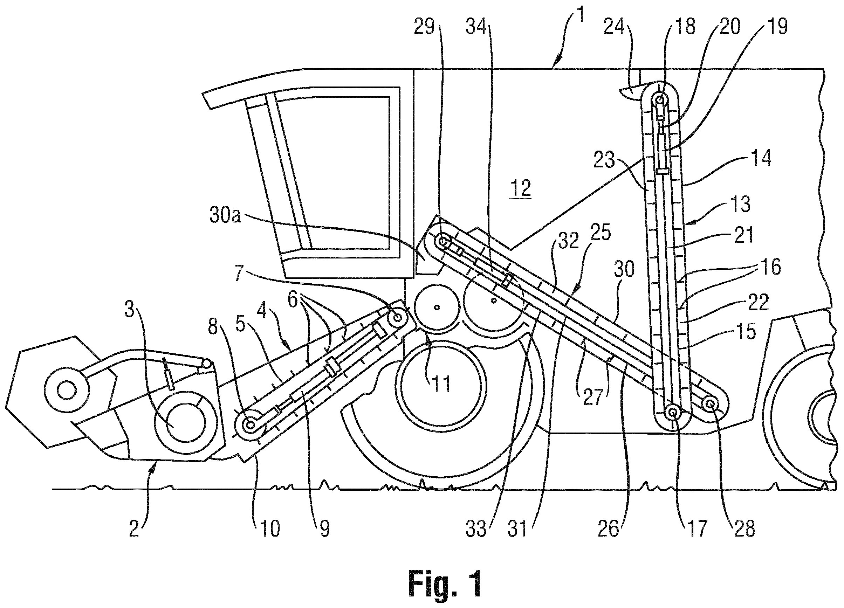

In der Figur 1 ist mit 1 ein selbstfahrender Mähdrescher bezeichnet, der in seinem Frontbereich einen beispielsweise als Getreide- bzw. Rapsschneidwerk ausgebildeten Erntevorsatz 2 aufweist. Ein Bestandteil dieses Erntevorsatzes 2 ist eine horizontal angeordnete Einzugsschnecke 3, die als Querförderer das Erntegut in einem mittleren Bereich des als Schneidwerkstisch ausgebildeten Erntevorsatzes 2 zusammenführt und dort einem Schrägförderer 4 zuführt. Dieser als Kettenförderer ausgebildete Schrägförderer 4 weist zwei Ketten 5 auf, von denen in der Darstellung nach Figur 1 nur eine sichtbar ist. Diese Ketten 5 sind zueinander beabstandet und nehmen als Förderleisten 6 ausgebildete Mitnehmer auf. Außerdem sind die Ketten 5 jeweils auf einem Antriebsritzel 7 und einem Umlenkritzel 8 geführt, wobei das jeweilige Umlenkritzel 8 zum Nachspannen der Ketten 5 über einen dem Umlenkritzel 8 zugeordneten Hydraulikzylinder 9 verschiebbar ist. Der Schrägförderer 4 weist außerdem ein Blechgehäuse 10 auf, das in seinem unteren Bereich mit den Förderleisten 6 zur Förderung des Halmgutes zusammenwirkt. Die Hydraulikzylinder 9 zum Spannen der Ketten 5 können dabei auch außerhalb des Blechgehäuses 10 angeordnet sein.

Das vom Erntevorsatz 2 gemähte und aufgenommene Erntegut wird über den Schrägförderer 4 einem als Doppeltrommelanordnung ausgebildeten Dreschwerk 11 zugeführt. Der selbstfahrende Mähdrescher 1 gemäß der Figur 1 weist ferner einen Korntank 12 auf, in welchem das Erntegut, im vorliegenden Fall Getreidekörner oder Rapsfrüchte, gesammelt wird und über eine nicht näher dargestellte Vorrichtung zur Korntankentleerung an einem auf dem Feld aufgestellten Transportcontainer übergeben werden kann.

Wie weiterhin aus der Darstellung nach der Figur 1 hervorgeht, führt ein Kornelevator 13 das Erntegut aus einem unteren Bereich des Mähdreschers 1 in den Korntank 12. Es handelt sich dabei, wie bereits erwähnt, um Getreidekörner oder Rapsfrüchte in einem mittels nicht näher dargestellter Siebe einer Reinigungsvorrichtung gereinigten Zustand. Der Kornelevator 13 besteht dabei aus einem Gehäuse 14, aus einer als Zugmittel dienenden Kette 15 und aus plattenförmigen Mitnehmern 16, die zueinander beabstandet auf der Kette 15 befestigt sind. Weiterhin ist die Kette 15 auf einem Antriebsritzel 17 geführt, das mit einer nicht näher dargestellten horizontalen Förderschnecke verbunden sein kann. Diese Förderschnecke transportiert das die Siebe des Mähdreschers 1 passierende Erntegut zunächst in den Kornelevator 13. Am anderen Ende des Kornelevators ist die Kette 15 auf einem Umlenkritzel 18 geführt, wobei dieses Umlenkritzel 18 gegenüber dem Antriebsritzel 17 derart verschiebbar ist, dass die Kette 15 gespannt werden kann.

Zu diesem Zweck ist ein Hydraulikzylinder 19 mit einer Kolbenstange 20 vorgesehen, der nach der Figur 1 mittig des Kornelevators 13 unmittelbar oder mittelbar am Umlenkritzel 18 angreifen soll. Das Gehäuse 14 des Kornelevators 13 ist über eine Trennwand 21 in einen Förderschacht 22, in dem sich der Leertrum befindet, und einen Rücklaufschacht 23, in dem sich der Zugtrum befindet, unterteilt. Außerdem weist das Gehäuse 20 in seinem dem Korntank 12 zugewandten Endabschnitt ein Austrittselement 24 auf, in dessen Bereich sich zumeist ebenfalls eine Querförderschnecke befindet, die das Erntegut aus dem Kornelevator 13 in den Korntank 12 befördert und dort verteilt.

Des Weiteren ist der selbstfahrende Mähdrescher 1 nach der Figur 1 mit einem Überkehrelevator 25 versehen, der hinsichtlich seiner Ausbildung und Funktion im Wesentlichen mit dem Kornelevator 13 übereinstimmt. Der Überkehrelevator 25 weist dabei eine Kette 26 auf, die plattenförmige Mitnehmer 27 aufnimmt. Dabei ist die Kette 26 über ein Antriebsritzel 28 und ein Umlenkritzel 29 in einem Gehäuse 30 geführt, wobei das Gehäuse 30 mittels einer Trennwand 31 in einen Förderschacht 32 und einen Rücklaufschacht 33 unterteilt wird. Das Gehäuse 30 weist ferner im Bereich des Dreschwerks 11 einen Auslauf 30a auf, so dass Erntegut, das in Form von nicht ausgedroschenen Ähren anfällt, nochmals dem Dreschwerk 11 zugeführt wird. Diese Anteile des Erntegutes, die dem Überkehrelevator 25 im unteren Bereich zugeführt werden, stammen als abgeschiedener Teil des Erntegutes aus den Sieben oder über einen Rücklaufboden aus den Hordenschüttlern des Mähdreschers 1. Die Kette 26 des Überkehrelevators 25 ist dabei analog der Anordnung innerhalb des Kornelevators 13 ebenfalls über einen Hydraulikzylinder 34 spannbar.

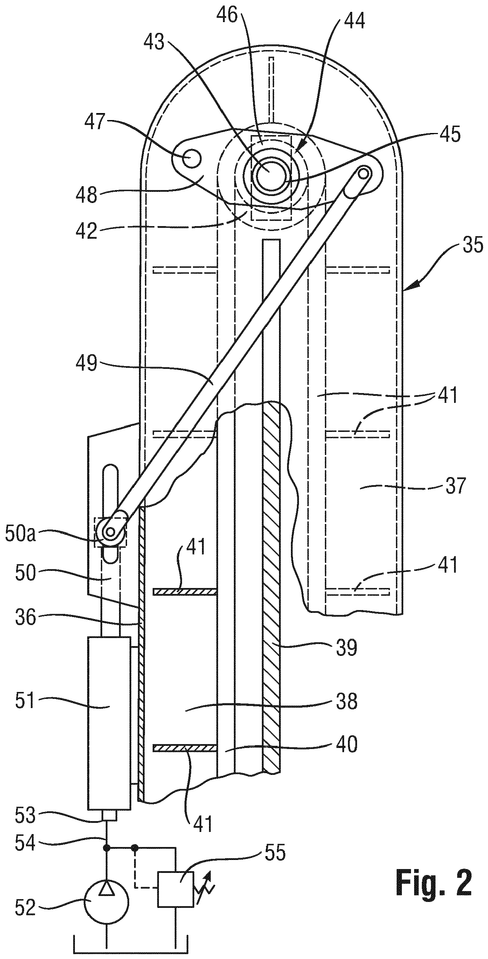

In der Figur 2 ist ein oberer Bereich eines Kornelevators 35 dargestellt, der aus einem Gehäuse 36 und einem das Innere des Gehäuses 36 in einen Förderschacht 37 und einen Rücklaufschacht 38 unterteilende Trennwand 39 aufweist. Im Inneren dieses Gehäuses 36 ist eine schematisch dargestellte Kette 40 angeordnet, die in regelmäßigen Abständen Mitnehmer 41 aufnimmt. Die Förderrichtung des Kornelevators gibt ein Pfeil FR an. Die Kette 40 ist am oberen Ende des Gehäuses 36 über ein Umlenkritzel 42 geführt, welches Umlenkritzel 42 auf einer Welle 43 befestigt und über zwei Flanschlager 44 im Gehäuse 36 gelagert ist. In der Darstellung ist nur eines dieser Flanschlager 44 sichtbar. Jedes der beiden Flanschlager 44 weist dabei in axialer Richtung einen zylindrischen Bund 45 auf, mit dem es in einem Schlitz 46 des Gehäuses 36 geführt ist.

Dabei umgreift ein an seinem einen Ende über eine Schwenkachse 47 an dem Gehäuse 36 schwenkbar geführter Schwinghebel 48 den jeweiligen zylindrischen Bund 45 des Flanschlagers 44, während ein anderes Ende dieses Schwinghebels 48 mit einer Koppelstange 49 in Verbindung steht. Diese am Schwinghebel 48 angreifende Koppelstange 49, von der dem Kornelevator 35 genauso wie die Flanschlager 44 und die Schwinghebel 48 zwei Stück zugeordnet sind, ist an ihrem anderen Ende über eine quer verlaufende Strebe 50a mit einer Kolbenstange 50 eines Hydraulikzylinders 51 verbunden. Der Hydraulikzylinder 51 ist ortsfest am Gehäuse 36 angeordnet. Insofern unterscheidet sich die Anordnung dieses Hydraulikzylinders 51 und somit die Art der Verschiebung des Umlenkritzels 42 im Vergleich zu der Anordnung nach der Figur 1.

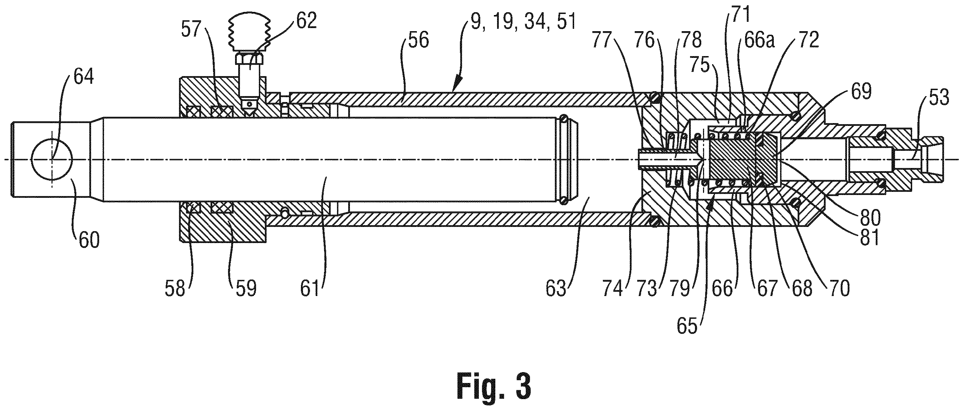

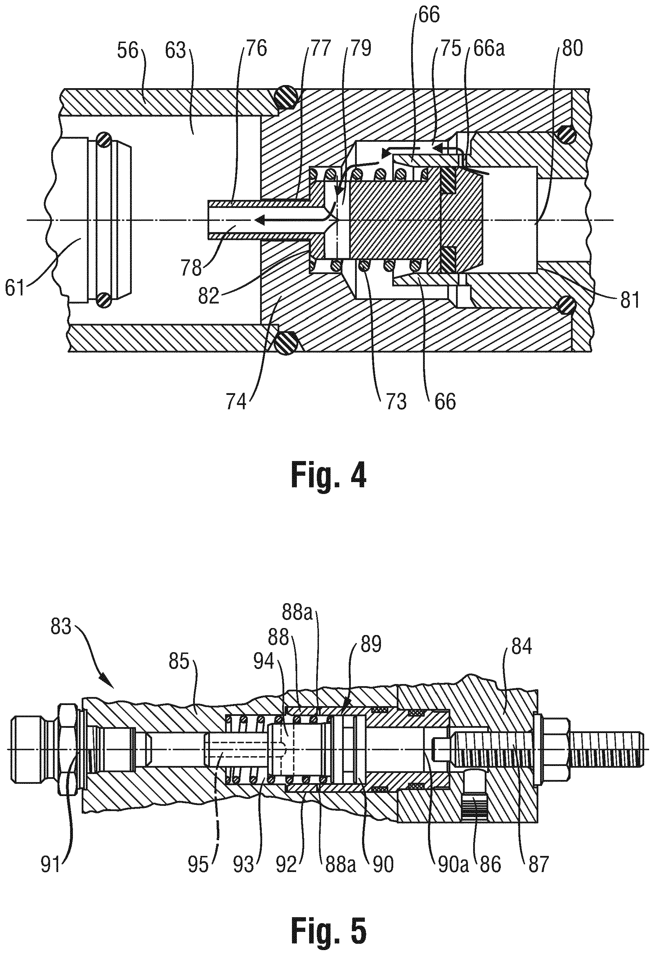

Der Hydraulikzylinder 51 wird über eine Konstantdruckquelle mit konstantem Druck versorg. Hierzu kann eine Hydraulikpumpe 52 den Hydraulikzylinder 51 mit Druckmittel versorgen, wobei eine die Hydraulikpumpe 52 mit einer Druckmittelzufuhrbohrung 53 verbindende Druckleitung 54 an ein Druckbegrenzungsventil 55 angeschlossen ist, über das der maximale Druck des in den Hydraulikzylinder 51 gelangenden Druckmittels eingestellt wird. Der Figur 2 ist somit eine Anordnung zu entnehmen, über welche die Vorspannung des als Kette 40 ausgebildeten Zugmittels selbststätig eingestellt werden kann. Zur Erläuterung der im Rahmen dieser Einrichtung zum Spannen der Kette 40 verwendeten erfindungsgemäßen Einrichtung, die auch bei entsprechenden Anordnungen von Hydraulikzylindern gemäß der Figur 1 Verwendung finden soll, wird auf die nachfolgenden Figuren 3 und 4 verwiesen. Der Hydraulikzylinder, der wegen seiner universellen Verwendung für ein Spannen von Zugmitteln in Fördereinrichtungen, die in den Figuren 1 und 2 dargestellt sind, geeignet ist, wird demzufolge mit den Bezugszeichen 9, 19, 34 und 51 bezeichnet.

Dabei setzt sich gemäß der Figur 3 der einfach wirkende Hydraulikzylinder 9, 19, 34, 51 aus einem Zylinderrohr 56, einem Dichtungen 57 und Abstreifer 58 aufnehmenden Zylinderkopf 59 sowie einem mit einer Kolbenstange 60 versehenen Hydraulikkolben 61 zusammen. Innerhalb des Zylinderkopfes 59 ist eine Ablassschraube 62 angeordnet, über welche ein Druckraum 63 innerhalb des Hydraulikzylinders 9, 19, 34, 51 zu Reparatur- oder Wartungsarbeiten druckentlastet werden kann. Die Kolbenstangen 60 weist an ihrem Ende ein Stangenauge 64 auf, über das die Kolbenstange 60 mittels eines nicht näher dargestellten Bolzens in der Anordnung nach der Figur 2 mit der Koppelstange 49 und in den Anordnungen nach der Figur 1 unmittelbar mit einer Lagerung des entsprechenden Umlenkritzels 8, 18, 29, 42 verbunden ist.

Am gegenüberliegenden Ende ist der Hydraulikzylinder 9, 19, 34, 51 mit einer Ventilanordnung verbunden, über die Druckmittel aus der Druckmittelzufuhrbohrung 53 in den Druckraum 63 geleitet oder der Druckraum 63 gegenüber dieser Druckmittelzufuhrbohrung 53 abgesperrt wird. Zu diesem Zweck ist ein Sperrventil 65 vorgesehen, das aus einer hohlzylindrischen Ventilhülse 66 und einem innerhalb dieser verschiebbaren Plungerkolben 67 besteht. Der Plungerkolben 67 nimmt einen Dichtring 68 auf, über welche der Plungerkolben 67 dichtend an einer Innenmantelfläche der Ventilhülse 66 geführt ist. Weiterhin weist der Plungerkolben 67 eine mit dem Druck des Druckmittels aus der Druckmittelzufuhrbohrung 53 beaufschlagte Stirnfläche 69 auf. An diese Stirnfläche 69 schließt sich ein kegelstumpfförmiger Abschnitt 70, also eine Anfasung des Plungerkolbens 67 an, während der Plungerkolben 67 an seiner der Stirnfläche 69 abgewandten Seite abgestuft ausgebildet ist.

Dadurch werden zum einen zwischen dem Plungerkolben 67 und der Ventilhülse 66 ein Ringraum 71 und zum anderen eine ringförmige Anlagefläche 72 geschaffen. Innerhalb dieses Ringraums 71 erstreckt sich eine Druckfeder 73, die sich an ihrem einen Ende an der ringförmigen Anlagefläche 72 des Plungerkolbens 67 und an ihrem anderen Ende an einem Ventilgehäuse 74 abstützt. Die innerhalb dieses Ventilgehäuses 74 angeordnete Ventilhülse 66 weist ferner eine Querbohrung 66a auf, über die in der Darstellung nach der Figur 3 der zwischen dem Plungerkolben 67 und der Ventilhülse 66 gebildete Ringraum 71 mit einem weiteren zwischen der Ventilhülse 66 und dem Ventilgehäuse 74 angeordneten Ringraum 75 in Verbindung steht.

Von dem Plungerkolben 67 geht ferner ein Führungsrohr 76 aus, das in einer Bohrung 77 des Venilgehäuses 74 verschiebbar angeordnet ist. Dieses Führungsrohr 76 weist einen Längskanal 78 auf, der mit einem im abgesetzten Abschnitt des Plungerkolbens 67 verlaufenden Querkanal 79 in Verbindung steht. Außerdem ist die Ventilhülse 66 in ihrem Inneren mit einer Stufenbohrung 80 versehen, so dass der in einem erweiterten Bohrungsbereich verlaufende Plungerkolben 67 in Richtung der Druckmittelzufuhrbohrung 53 gegen einen ringförmigen Anschlag 81 bewegt wird. Das geschieht aufgrund des im Druckraum 63 herrschenden Drucks mit Unterstützung durch die Druckfeder 73. In der Darstellung nach der Figur 3 befindet sich der Plungerkolben 67 in einer Position, in der sich seine Stirnfläche 69 nahe des ringförmigen Anschlags 81 befindet, wobei der Plungerkolben 67 eine Verbindung zwischen der Druckmittelzufuhrbohrung 53 zu der Querbohrung 66a absperrt. Daher kann in dieser Position des Plungerkolbens 67 kein zusätzliches Druckmittel aus der Druckmittelzufuhrbohrung 53 in den Druckraum 63 gelangen.

Demgegenüber befindet sich der Plungerkolben 67 nach der Figur 4 in seiner linken Maximalposition, in der der Plungerkolben 67 mit einer das Führungsrohr 76 radial umgebenden Ringfläche 82 an einer entsprechenden Fläche des Ventilgehäuses 74 anliegt. In dieser Position des Plungerkolbens 67, die bei einem Druckabfall in dem Druckraum 63 und folglich einer reduzierten Vorspannung der Kette zustande kommt, kann Druckmittel aus der Druckmittelzufuhrbohrung 53 über einen vom kegelstumpfförmigen Abschnitt 70 des Plungerkolbens gegenüber der Stufenbohrung 80 geschaffenen Drosselspalt anschließend über die Querbohrung 66a, den Ringraum 75, den Querkanal 79 sowie den Längskanal 78 in den Druckraum 63 gelangen, um hier den reduzierten Druck auszugleichen.

Ist dieser Druckausgleich erfolgt, d. h. die entsprechende Kette nachgespannt, so wird aufgrund des eintretenden Druckaufbaus im Druckraum 63 und der daraus resultierenden, gemeinsam mit der Druckfeder 73 auf den Plungerkolben 67 wirkenden Kraft der Plungerkolben 67 in Richtung seiner rechten Maximalposition verschoben, wodurch zunächst die Querbohrung 66a versperrt wird und anschließend durch den zurückbewegten Plungerkolben 67 ein zusätzlicher Raum geschaffen wird, der zur Aufnahme eines definierten Druckmittelvolumens aus dem Druckraum 63 dient. Dadurch erfolgt ein geringfügiges Lösen der Vorspannung der Kette, so dass sowohl der Antrieb der Kette, deren Lagerung als auch die Kette selbst vor Überbeanspruchungen geschützt ist. Der Plungerkolben 67 weist gemeinsam mit der Querbohrung 66a ein hysteresebehaftetes Schaltverhalten auf, d.h., dass die Querbohrung 66a erst dann wieder freigegeben wird, wenn der Druck im Druckraum 63 unter einen vorgegebenen Grenzwert abfällt.

In der Figur 5 ist ein separates Sperrventil 83 dargestellt, das die gleichen Funktionen übernimmt wie die Ventilanordnung nach den Figuren 3 und 4. Dabei soll dieses Sperrventil 83 ebenfalls mit der erfindungsgemäßen Einrichtung zur Aufnahme eines definierten Druckmittelvolumens versehen, aber separat zu einem entsprechenden Hydraulikzylinder angeordnet sein. Dieses Sperrventil 83 ist innerhalb eines zweiteiligen Ventilgehäuses 84, 85 angeordnet. In das Ventilgehäuse 84 mündet eine Druckmittelzufuhrbohrung 86 ein, in deren Bereich sich eine Entlastungsschraube 87 befindet. Ferner nehmen sowohl das Ventilgehäuse 84 als auch das Ventilgehäuse 85 eine Ventilhülse 88 auf, in der ein Plungerkolben 89 verläuft. Dieser Plungerkolben 89 weist ebenfalls einen kegelstumpfförmigen Steuerabschnitt 90 auf, über welchen er mit einer in der Ventilhülse 88 angeordneten Querbohrung 88a zusammenwirkt.

Das zweite Ventilgehäuse 85 nimmt einen Arbeitsanschluss 91 auf, der für die Verwendung in einer innerhalb einer Fördereinrichtung vorgesehenen Spanneinrichtung mit einem hydraulischen Hubzylinder in Verbindung stehen würde. Der Plungerkolben 89 ist stufenartig ausgebildet, d. h. er weist in seinem mittleren Abschnitt einen dichtend in der Ventilhülse 88 geführten Bereich mit dem zuvor erwähnten kegelstumpfförmigen Steuerabschnitt 90 auf. In Richtung der Entlastungsschraube 87 erstreckt sich ein verjüngt ausgebildeter Abschnitt des Plungerkolbens 89, auf dessen Stirnfläche 90a der Druck aus der Druckmittelzufuhrbohrung 86 wirkt. Außerdem kann die Entlastungsschraube 87 gegen diese Stirnfläche 90a bewegt werden und anschließend eine Stellbewegung auf den Plungerkolben 89 ausüben, so dass der Plungerkolben 89 in seine die Querbohrung 88a freigebende Stellung bewegt wird. Die Querbohrung 88a steht über einen Ringspalt 92 mit einem Federraum 93 und von dort aus über einen Querkanal 94 sowie einen Längskanal 95 mit dem Arbeitsanschluss 91 in Verbindung. Dies ermöglicht aber auch, dass im stehenden, drucklosen Zustand des Mähdreschers 1 das Ablassen von Öl über die Druckmittelzufuhrbohrung 86, so dass der Hydraulikzylinder zum Spannen des Zugmittels gelöst werden kann.

Auch nach der Figur 5 soll der Plungerkolben 89, der sich, wie dargestellt, in seiner Sperrstellung befindet, durch einen Druckabfall am Arbeitsanschluss 91 bei gleichzeitig anstehendem Druck an der Druckmittelzufuhrbohrung 86 aus dieser Position nach links verschoben werden, so dass die Querbohrung 88a entsprechend freigegeben wird. Das Druckmittel strömt in dieser Stellung des Plungerkolbens 89 über dessen kegelstumpfförmigen Steuerabschnitt 90 sowie die Querbohrung 88a, den Ringspalt 91, den Federraum 92, den Querkanal 94 sowie den Längskanal 95 zum Arbeitsanschluss 91. Erfolgt hingegen ein Druckaufbau am Arbeitsanschluss 91, der einen bestimmten Grenzwert überschreitet, so wird der Plungerkolben 89 wieder in seine in der Figur 5 dargestellte Position verschoben.

Der dabei zurückgelegte Weg des Plungerkolbens 89 führt dazu, dass ein definierter Raum zur Aufnahme des im Bereich des Arbeitsanschlusses 91 vorhandenen Druckmittels geschaffen wird, so dass der Druck entsprechend reduziert wird. Die Folge davon ist, dass die angeschlossene Spanneinrichtung, die in Figur 5 nicht näher dargestellt ist, um ein geringes Maß ihrer Vorspannkraft entlastet wird, so dass das Zugmittel der entsprechenden Fördereinrichtung vor Beschädigungen, die anderenfalls durch eine zu hohe Vorspannung auftreten würden, geschützt ist.

### Bezugszeichenliste

- 1: selbstfahrender Mähdrescher
- 2: Erntevorsatz
- 3: Einzugsschnecke
- 4: Schrägförderer
- 5: Ketten
- 6: Förderleisten
- 7: Antriebsritzel
- 8: Umlenkritzel
- 9: Hydraulikzylinder
- 10: Blechgehäuse
- 11: Dreschwerk
- 12: Korntank
- 13: Kornelevator
- 14: Gehäuse
- 15: Kette
- 16: Mitnehmer
- 17: Antriebsritzel
- 18: Umlenkritzel
- 19: Hydraulikzylinder
- 20: Kolbenstange
- 21: Trennwand
- 22: Förderschacht
- 23: Rücklaufschacht
- 24: Austrittselement
- 25: Überkehrelevator
- 26: Kette
- 27: Mitnehmer
- 28: Antriebsritzel
- 29: Umlenkritzel
- 30: Gehäuse
- 30a: Auslauf
- 31: Trennwand
- 32: Förderschacht
- 33: Rücklaufschacht
- 34: Hydraulikzylinder
- 35: Kornelevator
- 36: Gehäuse
- 37: Förderschacht
- 38: Rücklaufschacht
- 39: Trennwand
- 40: Kette
- 41: Mitnehmer
- 42: Umlenkritzel
- 43: Welle
- 44: Flanschlager
- 45: zylindrischer Bund
- 46: Schlitz
- 47: Schwenkachse
- 48: Schwinghebel
- 49: Koppelstange
- 50: Kolbenstange
- 50a: Strebe
- 51: Hydraulikzylinder
- 52: Hydraulikpumpe
- 53: Druckmittelzufuhrbohrung
- 54: Druckleitung
- 55: Druckbegrenzungsventil
- 56: Zylinderrohr
- 57: Dichtung
- 58: Dichtung
- 59: Zylinderkopf
- 60: Kolbenstange
- 61: Hydraulikkolben
- 62: Ablassschraube
- 63: Druckraum
- 64: Stangenauge
- 65: Sperrventil
- 66: Ventilhülse
- 66a: Querbohrung
- 67: Plungerkolben
- 68: Dichtring
- 69: Stirnfläche
- 70: kegelstumpfförmiger Abschnitt
- 71: Ringraum
- 72: ringförmige Anlagefläche
- 73: Druckfeder
- 74: Ventilgehäuse
- 75: Ringraum
- 76: Führungsrohr
- 77: Bohrung
- 78: Längskanal
- 79: Querkanal
- 80: Stufenbohrung
- 81: ringförmiger Anschlag
- 82: Ringfläche
- 83: Sperrventil
- 84: Ventilgehäuse
- 85: Ventilgehäuse
- 86: Druckmittelzufuhrbohrung
- 87: Entlastungsschraube
- 88: Ventilhülse
- 88a: Querbohrung
- 89: Plungerkolben
- 90: kegelstumpfförmiger Steuerabschnitt
- 90a: Stirnfläche
- 91: Arbeitsanschluss
- 92: Ringspalt
- 93: Federraum
- 94: Querkanal
- 95: Längskanal

## Patentansprüche

1. Fördereinrichtung mit einer Vorrichtung zum Spannen zumindest eines Zugmittels (5, 15, 26, 40) der Fördereinrichtung, welches Zugmittel (5, 15, 26, 40) eine Vielzahl von Mitnehmern (6, 16, 27, 41) aufweist und zwischen einem Antriebsrad (7, 17, 28) und zumindest einem Umlenkrad (8, 18, 29, 42) der Fördereinrichtung verläuft, die Vorrichtung umfassend einen oder mehreren Hydraulikzylinder (9, 19, 34, 51), eine Druckquelle (52), ein Sperrventil (65,83) und eine Einrichtung zur Aufnahme eines definierten Druckmittelvolumens, wobei zur Veränderung der Spannung des Zugmittels (5, 15, 26, 40) der Achsabstand zwischen dem zumindest einen Umlenkrad (8, 18, 29, 42) und dem Antriebsrad (7, 17, 28) mittels des mittelbar am Umlenkrad (8, 18, 29, 42) angreifenden Hydraulikzylinders (9, 19, 34, 51) verstellbar ist, dessen in einem Druckraum (63) verschiebbar angeordneter Hydraulikkolben (61) zum Spannen des Zugmittels (5, 15, 26, 40) aus der Druckquelle (52) über das zum Druckraum (63) hin öffnendes Sperrventil (65, 83) mit Druckmittel beaufschlagt wird, wobei der Druckraum (63) nach Erreichen eines Sperrzustandes des Sperrventils (65, 83) mit der Einrichtung zur Aufnahme eines definierten Druckmittelvolumens verbunden ist, wobei das Sperrventil (65, 83) als Rückschlagventil ausgebildet ist, **dadurch gekennzeichnet, dass** das Rückschlagventil (65,83) ein hysteresebehaftetes Schaltverhalten aufweist, wobei ein in Richtung einer Druckmittelzufuhrbohrung (53, 86) federbelasteter Schließkörper (67, 89) des Rückschlagventils mit der Einrichtung zur Aufnahme des definierten Druckmittelvolumens eine Baueinheit bildet.

2. Fördereinrichtung nach Patentanspruch 1, **dadurch gekennzeichnet, dass** das Rückschlagventil als leckölfreier Schließkörper einen in einer Ventilhülse (66, 88) verschiebbaren Plungerkolben (67, 89) aufweist, wobei bei geöffnetem Rückschlagventil die Druckmittelzufuhrbohrung (53, 86) über zumindest eine in der Ventilhülse (66, 88) vorgesehene Queröffnung (66a, 88a) mit dem Druckraum (63) des Hydraulikzylinders (9, 19, 34, 51) verbunden ist.

3. Fördereinrichtung nach Patentanspruch 1, **dadurch gekennzeichnet, dass** das Rückschlagventil einen in einer Ventilhülse (66, 88) verschiebbaren Plungerkolben (67, 89) aufweist, der auf Grund des im Druckraum (63) herrschenden Druckes um einen vorgegebenen maximalen Weg in einer Ventilhülse (66, 88) verschiebbar ist.

4. Fördereinrichtung nach Patentanspruch 2, **dadurch gekennzeichnet, dass** der Plungerkolben (67, 89) an seinem in Richtung der Druckmittelzufuhrbohrung (53, 86) weisenden Ende einen kegelstumpfförmigen Verlauf (70, 90) aufweist.

5. Fördereinrichtung nach Patentanspruch 2, **dadurch gekennzeichnet, dass** der Plungerkolben (67, 89) an seinem in Richtung des Druckraumes (63) weisenden Ende einen im Durchmesser reduzierten Abschnitt und ein von diesem ausgehendes Führungsrohr (76) aufweist, wobei der Plungerkolben (67, 89) über das Führungsrohr (76) in einem Ventilgehäuse (74, 85) geführt ist.

6. Fördereinrichtung nach Patentanspruch 1, **dadurch gekennzeichnet, dass** der Hydraulikzylinder(9, 19, 34, 51) mit einer Ablassschraube (62) versehen ist.

7. Fördereinrichtung nach Patentanspruch 1, **dadurch gekennzeichnet, dass** der Hydraulikzylinder (9, 19, 34, 51) mit einer Entlastungsschraube (87) versehen ist.

8. Fördereinrichtung nach Patentanspruch 1, **dadurch gekennzeichnet, dass** die Fördereinrichtung als Kettenförderer für einen Kornelevator (13, 35), für einen Überkehrelevator (25) oder für einen Schrägförderer (4) für einen Mähdrescher (1) ausgebildet ist.

9. Fördereinrichtung nach Patentanspruch 8, **dadurch gekennzeichnet, dass** das Kettenritzel (8, 18, 29, 42) des Umlenkrades über eine Welle (43) in Flanschlagern (44) geführt ist und dass in einem Gehäuse (10, 14, 30, 36) des Kettenförderers im Bereich der Flanschlager (44) Schlitze (46) vorgesehen sind, innerhalb welcher die Flanschlager (44) mittels des Hydraulikzylinders (9, 19, 34, 51) verschiebbar sind.

10. Fördereinrichtung nach Patentanspruch 9, **dadurch gekennzeichnet, dass** beidseitig des Gehäuses (36) jeweils eine Koppelstange ((49) verläuft, die einerseits über einen Exzenter oder Schwinghebel (48) mit dem Flanschlager (44) und andererseits über eine Strebe (50a) mit der Kolbenstange (50) des Hydraulikzylinders (9, 19, 34, 51) verbunden ist.

11. Fördereinrichtung nach einem der Patentansprüche 1 bis 10, mit einem Konstantdrucksystem, wobei die Vorrichtung an das Konstantdrucksystem angeschlossen ist.

12. Fördereinrichtung nach einem der Patentansprüche 1 bis 10, **dadurch gekennzeichnet, dass** die Vorrichtung einen hydraulischen Speicher umfasst, der das Druckmittel mit konstantem Druck bereitstellt.

## Claims

1. A conveyor apparatus comprising a device for tensioning at least one traction means (5, 15, 26, 40) of the conveyor apparatus, which traction means (5, 15, 26, 40) has a plurality of entrainment members (6, 16, 27, 41) and extends between a drive wheel (7, 17, 28) and at least one direction-changing wheel (8, 18, 29, 42) of the conveyor apparatus, the device including one or more hydraulic cylinders (9, 19, 34, 51), a pressure source (52), a stop valve (65, 83) and a device for receiving a defined pressure medium volume, wherein for altering the tension of the traction means (5, 15, 26, 40) the axis spacing between the at least one direction-changing wheel (8, 18, 29, 42) and the drive wheel (7, 17, 28) is adjustable by means of the hydraulic cylinder (9, 19, 34, 51) which indirectly engages the direction-changing wheel (8, 18, 29, 42) and whose hydraulic piston (61) which is arranged displaceably in a pressure chamber (63) for tensioning the traction means (5, 15, 26, 40) is acted upon with pressure medium from the pressure source (52) by way of the stop valve (65, 83) which opens towards the pressure chamber (63), wherein after a blocking state of the stop valve (65, 83) is reached the pressure chamber (63) is connected to the device for receiving a defined pressure means volume, wherein the stop valve (65, 83) is in the form of a non-return valve,
**characterised in that** the non-return valve (65, 83) has a hysteresis-affected switching behaviour, wherein a closure body (67, 89) of the non-return valve, that is spring-loaded in the direction of a pressure medium feed bore (53, 86), forms a structural unit with the device for receiving the defined pressure medium volume.

2. A conveyor apparatus according to claim 1 **characterised in that** the non-return valve in the form of a leakage oil-free closure body, has a plunger (67, 89) displaceable in a valve sleeve (66, 88), wherein when the non-return valve is open the pressure medium feed bore (53, 86) is connected to the pressure chamber (63) of the hydraulic cylinder (9,19, 34, 51) by way of at least one transverse opening (66a, 88a) provided in the valve sleeve (66, 88).

3. A conveyor apparatus according to claim 1 **characterised in that** the non-return valve has a plunger (67, 89) which is displaceable in a valve sleeve (66, 88) and which is displaceable by a predetermined maximum travel in a valve sleeve (66, 88) by virtue of the pressure prevailing in the pressure chamber (63).

4. A conveyor apparatus according to claim 2 **characterised in that** the plunger (67, 89) is of a frustoconically shaped configuration (70, 90) at its end facing in the direction of the pressure medium feed bore (53, 86).

5. A conveyor apparatus according to claim 2 **characterised in that** the plunger (67, 89) has a portion of reduced diameter at its end facing in the direction of the pressure chamber (63) and a guide tube (76) extending from said portion, wherein the plunger (67, 89) is guided in a valve housing (74, 85) by way of the guide tube (76).

6. A conveyor apparatus according to claim 1 **characterised in that** the hydraulic cylinder (9, 19, 34, 51) is provided with a drain screw (62).

7. A conveyor apparatus according to claim 1 **characterised in that** the hydraulic cylinder (9, 19, 34, 51) is provided with a load relief screw (87).

8. A conveyor apparatus according to claim 1 **characterised in that** the conveyor apparatus is in the form of a chain conveyor for a grain elevator (13, 35), for a tailings elevator (25) or for an inclined conveyor (4) for a combine harvester (1).

9. A conveyor apparatus according to claim 8 **characterised in that** the chain pinion (8, 18, 29, 42) of the direction-changing wheel is guided by way of a shaft (43) in flange bearings (44) and that provided in a housing (10, 14, 30, 36) of the chain conveyor in the region of the flange bearings (44) are slots, within which the flange bearings (44) are displaceable by means of the hydraulic cylinder (9, 19, 34, 51).

10. A conveyor apparatus according to claim 9 **characterised in that** extending on both sides of the housing (36) is a respective coupling rod (49) which on the one hand is connected to the flange bearing (44) by way of an eccentric or rocker lever (48) and on the other hand is connected to the piston rod (50) of the hydraulic cylinder (9, 19, 34, 51) by way of a strut (50a).

11. A conveyor apparatus according to one of claims 1 to 10 comprising a constant pressure system, wherein the device is connected to the constant pressure system.

12. A conveyor apparatus according to one of claims 1 to 10 **characterised in that** the device includes a hydraulic storage means which provides the pressure medium under constant pressure.

## Revendications

1. Équipement de convoyage comprenant un dispositif pour tendre au moins un moyen de traction (5, 15, 26, 40), ledit moyen de traction (5, 15, 26, 40) comprenant une pluralité de moyens entraîneurs (6, 16, 27, 41) et s'étendant entre une roue d'entraînement (7, 17, 28) et au moins une roue de renvoi (8, 18, 29, 42) de l'équipement de convoyage, le dispositif comportant un ou plusieurs vérins hydrauliques (9, 19, 34, 51), une source de pression (52), une valve d'arrêt (65, 83) et un équipement de réception d'un volume de moyen de pression défini, pour modifier la tension du moyen de traction (5, 15, 26, 40) l'entraxe entre la au moins une roue de renvoi (8, 18, 29, 42) et la roue d'entraînement (7, 17, 28) étant réglable à l'aide du vérin hydraulique (9, 19, 34, 51) qui agit indirectement sur la roue de renvoi (8, 18, 29, 42) et dont le piston hydraulique (61) monté coulissant dans une chambre de pression (63) est sollicité par du moyen de pression pour tendre le moyen de traction (5, 15, 26, 40) à partir de la source de pression (52) par l'intermédiaire de la valve d'arrêt (65, 83) s'ouvrant en direction de la chambre de pression (63), la chambre de pression (63) étant reliée, après atteinte d'un état d'arrêt de la valve d'arrêt (65, 83), à l'équipement de réception d'un volume de moyen de pression défini, la valve d'arrêt (65, 83) étant conformée en valve anti-retour (65, 83), **caractérisé en ce que** la valve anti-retour (65, 83) présente un comportement de commutation à hystérésis, un corps de fermeture (67, 89) de la valve anti-retour sollicité élastiquement en direction d'un perçage d'alimentation en moyen de pression (53, 86) formant une unité structurelle avec l'équipement de réception d'un volume de moyen de pression défini.

2. Équipement de convoyage selon la revendication 1, **caractérisé en ce que** la valve anti-retour comporte, comme corps de fermeture exempt de fuite d'huile, un piston plongeur (67, 89) coulissant dans un manchon de valve (66, 68), à valve anti-retour ouverte le perçage d'alimentation en moyen de pression (53, 86) étant relié, par l'intermédiaire d'au moins une ouverture transversale (66a, 88a) prévue dans le manchon de valve (66, 68), à la chambre de pression (63) du vérin hydraulique (9, 19, 34, 51) .

3. Équipement de convoyage selon la revendication 1, **caractérisé en ce que** la valve anti-retour comporte un piston plongeur (67, 89) qui coulisse dans un manchon de valve (66, 68) et qui, en raison de la pression régnant dans la chambre de pression (63), peut coulisser dans un manchon de valve (66, 88) selon une course maximale prédéfinie.

4. Équipement de convoyage selon la revendication 2, **caractérisé en ce que**, à son extrémité orientée en direction du perçage d'alimentation en moyen de pression (53, 86), le piston plongeur (67, 89) présente une forme tronconique (70, 90).

5. Équipement de convoyage selon la revendication 2, **caractérisé en ce que**, à son extrémité orientée en direction de la chambre de pression (63), le piston plongeur (67, 89) présente une portion à diamètre réduit et un tube de guidage (76) qui part de celle-ci, le piston plongeur (67, 89) étant guidé par l'intermédiaire du tube de guidage (76) dans un boîtier de valve (74, 85).

6. Équipement de convoyage selon la revendication 1, **caractérisé en ce que** le vérin hydraulique (9, 19, 34, 51) est muni d'une vis de vidange (62).

7. Équipement de convoyage selon la revendication 1, **caractérisé en ce que** le vérin hydraulique (9, 19, 34, 51) est pourvu d'une vis de décharge (87).

8. Équipement de convoyage selon la revendication 1, **caractérisé en ce que** l'équipement de convoyage est conformé en convoyeur à chaîne pour un élévateur de grains (13, 35), pour un élévateur à ôtons (25) ou pour un convoyeur incliné (4) pour une moissonneuse-batteuse (1).

9. Équipement de convoyage selon la revendication 8, **caractérisé en ce que** le pignon à chaîne (8, 18, 29, 42) de la roue de renvoi est guidé par l'intermédiaire d'un arbre (43) dans des paliers à bride (44), et **en ce que** dans un carter (10, 14, 30, 36) du convoyeur à chaîne sont prévues, dans la zone des paliers à bride (44), des fentes (46) à l'intérieur desquelles les paliers à bride (44) peuvent coulisser au moyen du vérin hydraulique (9, 19, 34, 51).

10. Équipement de convoyage selon la revendication 9, **caractérisé en ce que** de part et d'autre du carter (36) s'étend une tige d'accouplement (49) qui est reliée, d'une part, au palier à bride (44) par l'intermédiaire d'un excentrique ou d'un levier oscillant (48) et, d'autre part, à la tige de piston (50) du vérin hydraulique (9, 19, 34, 51) par l'intermédiaire d'une jambe de force (50a).

11. Équipement de convoyage selon une des revendications 1 à 10, comprenant un système à pression constante, le dispositif étant relié au système à pression constante.

12. Équipement de convoyage selon une des revendications 1 à 10, **caractérisé en ce que** le dispositif comprend un accumulateur hydraulique qui fournit le moyen de pression à pression constante.
